Europäisches Patentamt

European Patent Office

Office européen des brevets

(19)

(11) Publication number: **0 333 668**
**A2**

(12) **EUROPEAN PATENT APPLICATION**

(21) Application number: **89830090.0**

(22) Date of filing: **02.03.89**

(51) Int. Cl.⁴: **F 16 H 3/08**

(30) Priority: **02.03.88 IT 1156088**

(43) Date of publication of application:
**20.09.89 Bulletin 89/38**

(84) Designated Contracting States: **AT DE ES FR GB**

(71) Applicant: **Bondioli, Edi**
**Via Gina Bianchi 18**
**46029 Suzzara Mantova (IT)**

(72) Inventor: **Bondioli, Edi**
**Via Gina Bianchi 18**
**46029 Suzzara Mantova (IT)**

(74) Representative: **Mannucci, Gianfranco, Dott.-Ing.**
**Ufficio Tecnico Ing. A. Mannucci Via della Scala 4**
**I-50123 Firenze (IT)**

(54) A drive with mechanical group for varying the gear ratio, and with driving and driven shafts orthogonal one to the other.

(57) A drive with a gear box comprises a housing in which there are supported two parallel shafts (11, 27); on a first of said shafts, there are keyed gears (15, 17, 19) which constantly mesh with corresponding gears (21, 23, 25) supported by the other of said shafts (11, 27); an axial cavity inside said second shaft (27) houses a sliding pin (35), which serves as control means acting on radial pegs (41, 43, 45) designed to alternately engage on said shaft (27) one or the other of the gears (21, 23, 25) mounted on said shaft (27).

Fig.1

EP 0 333 668 A2

Bundesdruckerei Berlin

## Description

## A DRIVE WITH MECHANICAL GROUP FOR VARYING THE GEAR RATIO, AND WITH DRIVING AND DRIVEN SHAFTS ORTHOGONAL ONE TO THE OTHER

The invention refers to a drive with a mechanical group for varying the gear ratio (gear box) which is built with particular criteria of functionality and flexibility of use and offering further objects and advantages which will become clear from a reading of the following description.

According to the invention the drive comprises a box or housing, pairs of constant mesh gears mounted on two parallel shafts, on one of which the respective gears are keyed, and on the other of which the respective gears are idly mounted and are provided, in the central hole, with longitudinal seats having inclined sides for the coupling. One of said shafts has a coaxial cavity and, in correspondence of said gears, radial slide seats between said cavity and the outside of the shaft. Within said radial seats, there are housed radially movable pegs which are provided with friction braking means and with internal and external end shapings. Within said cavity a pin is housed which is provided with handling means for the axial displacement thereof, with axial positioning means and with a shoulder joined to the pin for cooperating with the internal end shapings of said pegs and for selectively operating the radial displacement of said pegs in centrifugal direction, in order to selectively engage one of the gears as the external end shapings penetrate into the relevant longitudinal seats. There are also provided means for actuating the primary shaft and further drive means downstream of the group for varying the gear ratio (i.e. the gear box).

In practice, the external ends of the pegs have the form of two walls which have inclinations corresponding to the inclination of the sides of the longitudinal seats inside the holes of the gears, while the internal ends may be frusto-conical or, anyway, have the shape of a surface of revolution.

The drive may comprise a pair of bevel gears inside said box, said box being made up of two bodies one of which houses said pair of bevel gears and can be applied to the other so as to be oriented about one of the shafts of the gear box, thereby allowing the orientation of the input - or the output - shaft.

The shaft which houses the pin provided for operating the selective coupling of the gears fitted thereon, may be the driven shaft or the secondary shaft.

The drawing shows feasible embodiments of the invention, and in particular:

Fig. 1 shows a gear box according to the invention in a section taken along the plane containing the axes of the primary and secondary shafts;

Fig. 2 shows a section along line II-II of Fig. 1;

Figs. 3 and 4 are sections along line III-III of Fig. 1 showing a disengagement and engagement condition, respectively;

Figs. 5 and 6 show a single peg; and

Fig. 7 shows a section corresponding to the section of Fig. 1 in a modified embodiment.

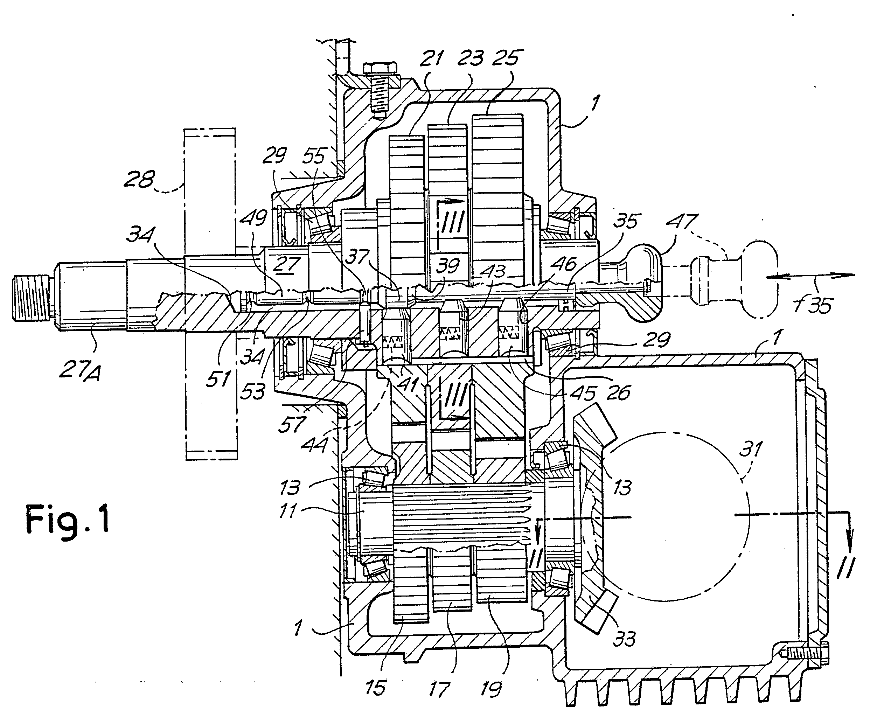

According to what is illustrated in the attached drawing and with initial reference to Figs. 1 to 6, within a box 1 there are housed respectively: a driving shaft 3, borne by bearings 5 and connected, through a torque-limiter joint 7 (e.g. a clutch with disks and corresponding spring means), to a universal joint, only the fork 9 of which is shown in Fig. 1; a secondary shaft 11 borne by bearings 13, on which there are keyed three gears 15, 17, 19 which constantly mesh with corresponding gears 21, 23, 25 having their central hole provided with longitudinal seats 26. Said gears are mounted on a driven shaft 27 - supported by bearings 29 - and are alternately engageable with said driven shaft 27 in the manner described below. The motion is transmitted from the driving shaft 3 to the secondary shaft 11 through a pair of bevel gears 31, 33.

An end 3A of the driving shaft 3, having a splined profile or similar coupling means, projects from the box 1 to make up a possible further power output, while the driven shaft 27 projects with its end 27A which has suitable coupling means, for example a gear 28.

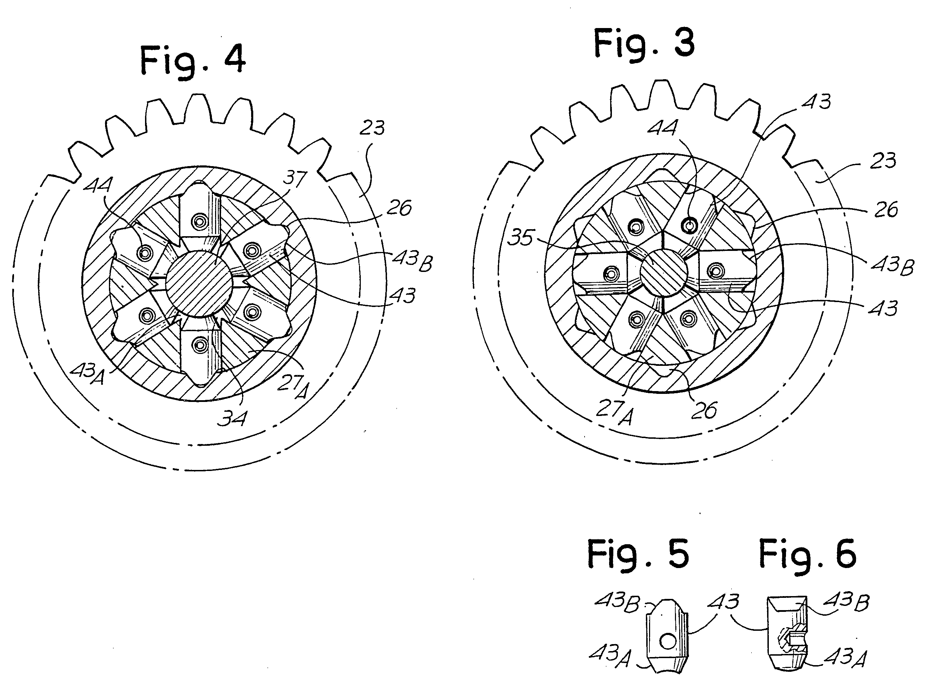

The driven shaft 27 is partially hollow and provided with an axial cavity 34 to receive a shaped pin 35 having a shoulder 37 suitably joined at 39 to the said pin; the pin 35 - by moving axially inside the shaft 27 - can be positioned with the shoulder 37 in correspondence of one of the three gears 21, 23, 25 thus causing them to engage onto the driven shaft by means of pegs 41, 43, 45 housed in corresponding radial seats 46 of said shaft and able to slide, owing to the thrust exerted by the shoulder 37, from a re-entered position (like the one taken up by pegs 43 and 45 in Fig. 1 and by pegs 43 in Fig. 3) to an extracted position, such as the one taken up by peg 41 in Fig. 1.

Fig. 3 shows a local cross-section of the driven shaft 27, of pin 35 and of gear 23, wherein the radial seats 46 for the sliding of pegs 43 are shown. In the shown embodiment, six seats 46 and six corresponding pegs 43 are provided for each gear, thereby making it possible to have an efficient transmission of torques even of high value. As it can be seen in this cross-section, the pegs 43, and also the remaining pegs 41 and 45, are provided with a frusto-conical internal end 43A, whose surface contacting the pin 35 has a cylindrical profile with a curvature which is approximately equivalent to the curve of said pin 35, so that said pegs are substantially not subjected to rotational movements about their own axis during the operation. This is necessary for causing the external ends (like that indicated by 43B) of said pegs to fit efficiently into the longitudinal seats 26 formed in the central hole of the corresponding gear. Said seats 26 are machined, for example by broaching, in the form of axial grooves, whose walls have a suitable inclination for cooperating with the beveling forming the external ends such as those indicated by 43B. When the shoulder 37 pushes radially the pegs of a set outwardly, for example the pegs 43, the external ends 43B thereof are made to fit into the corresponding seats 26, helped in this movement by the rotation imposed to the gears by the secondary shaft. When, in order to disengage the gear, the shoulder 37 is withdrawn from below the pegs 43, these are pushed by the sides of seats 26 into the radial seats 46 towards the axis and retained therein, until the subsequent engagement manoeuvre takes place, through friction braking means 44 which comprise, for example, a spring member inserted into a transverse seat of the corresponding peg 43 and projecting therefrom to press against the wall of the radial seat 46.

In the condition shown in Fig. 1, the gear 21 is keyed on the driven shaft 27 so that the motion is transmitted from the driving shaft to the driven shaft with a gear ratio which is determined by gears 15, 21. By moving the pin 35 axially according to arrow f35, it is possible to cause the disengagement of gear 21 and the engagement of gear 23 or gear 25, with consequent variation of the gear ratio. The pin 35 may be provided with a suitable control member which, in Fig. 1, is shaped as a simple knob 47.

The pin 35 is provided, on an extension 49, with three annular grooves 51, 53, 55 mutually spaced apart of an extent corresponding to the travel that the pin has to perform in order to disengage one of the gears 21, 23, 25 and to engage the adjacent one. A spring peg 57 is alternately inserted into groove 55, or 53, or 51 depending whether the shoulder 37 is in correspondence of gear 21, or 23, or 25, respectively. The spring peg 57 keeps the sliding pin 35 in the position taken up after its positioning by means of knob 47, until an axial force is exerted which is sufficient to cause the axial slide of the pin and thus the variation of the gear ratio.

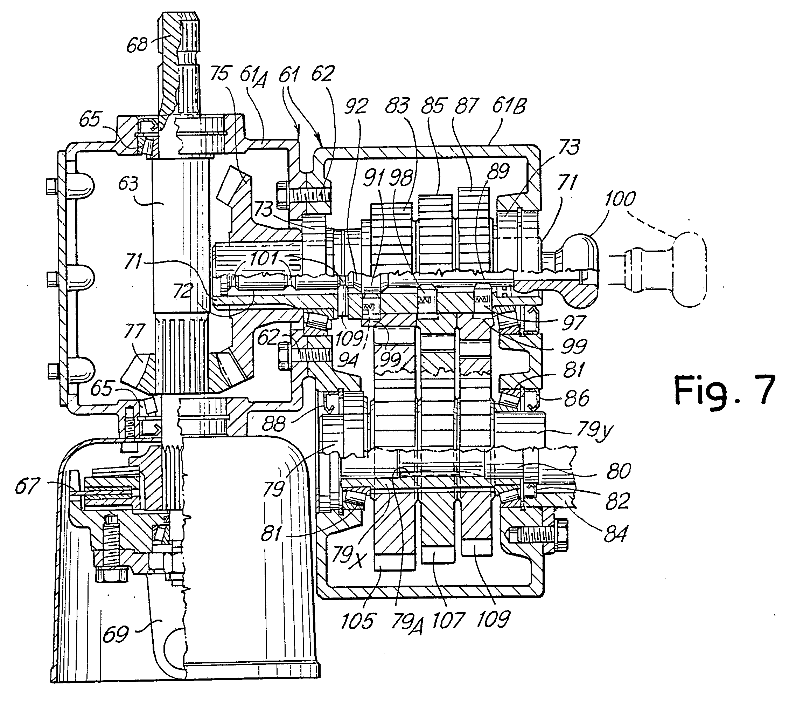

Fig. 7 shows the same gear box of Figs. 1 to 3 with a different arrangement of the driving, secondary and driven shafts.

In this arrangement, inside a box 61 made up of two bodies 61A and 61B, there are housed: a driving shaft 63 borne by two bearings 65 and connected, through a torque-limiter 67, to a universal joint, a fork of which is shown in the drawing and denoted by 69; a secondary shaft 71 with an axial cavity 72, borne by two bearings 73 and having a bevel gear 75 keyed thereon meshing with a second bevel gear 77 keyed on the driving shaft 63 so as to form a pair of bevel gears for the motion transmission; and a driven shaft 79 borne by bearings 81. Fig. 7 shows two possible configurations 79X and 79Y for said driven shaft.

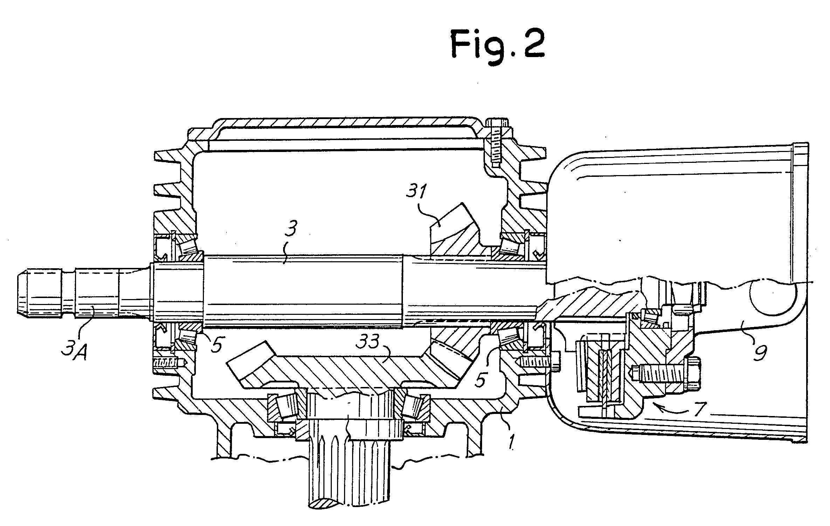

Similarly to what has been illustrated with reference to Figs. 1 and 2, on the secondary shaft 71 three gears 83, 85 and 87 are mounted able to become alternately engaged to said shaft through a mechanism comprising, within the axial cavity 72, a pin 89 with a shoulder 91 joined at 92 to the pin 89, said shoulder causing pegs 93, 95, 97 to slide within corresponding radial seats 98, from e re-entered position (as shown for pegs 95 and 97) to an extracted position (such as the one of peg 93) in which the pegs make the corresponding gear (the one indicated by 83 in the drawing) solid with the shaft 71, by engaging in the longitudinal seats 99 of the holes of said gears. Similarly to what has been illustrated with reference to Figs. 1 and 2, the pin 89 is provided with a knob 100 for its manoeuvring. The pegs 93, 95, 97, and the corresponding seats for their radial slide and engagement into the gears, may be similar to those shown in Fig. 3. Also in this case, friction braking means 94 are provided.

The end of pin 89 opposite to the end carrying the knob 100 is provided with three annular grooves 101, corresponding to grooves 51, 53, 55, and cooperating with a spring peg 103, corresponding to peg 57, for the purposes already indicated with reference to the arrangement of Figs. 1 and 2.

On the driven shaft 79 (respectively 79X or 79Y) there are mounted gears 105, 107 and 109, which constantly mesh with the corresponding gears 83, 85, 87 of the secondary shaft.

As shown in the drawing, the driven shaft 79 may be hollow. In Fig. 7 there are shown two different embodiments of said shaft 79, denoted by 79X and 79Y, respectively.

The shaft 79 has an internal portion 79A with splined profile for the coupling with shaft 80, for drawing the motion, whose end has a corresponding splined profile. In the version 79X, a lip or similar seal member 82, housed in a seat of a flange 84 coupled to the box 61, ensures the seal on the output shaft. When the driven shaft 79 is built in the version 79Y, the seal may be ensured, for example, by a lip seal 86 or the like, fitted in a corresponding seat formed in the body 61B of box 61 and intended to ensure sealing on the shaft 79Y. A second seal 88 may be provided in correspondence of the opposite end of the shaft 79Y.

Also in this case, the driving shaft 63 may protrude from the box 61 on the side opposite to that of clutch 67 to form a further motion drive, i.e. a power take-off 68.

The particular disposition of the driving, secondary and driven shafts, as well as the configuration of box 61 in two portions 61A, 61B connected by screws 62, allow the relative position of the driving shaft 63 to be selected with respect to the driven shaft by simply connecting the two portions 61A, 61B one to the other in the desired position. To this end, the connection screws 62 must be in suitable number and symmetrically disposed around the axis of the secondary shaft 71.

Claims

1. A drive with a gear-ratio variation group (gear box) comprising: a box or housing; pairs of constant mesh gears (15, 17, 19; 21, 23, 25 - 83, 85, 87; 105, 107, 109) mounted on two parallel shafts (11; 27 - 71, 79), on one of which (11 - 79) the respective gears (15, 17, 19, - 105, 107, 109) are keyed, and on the other of which (27 - 71) the respective gears (21, 23, 25 - 83, 85, 87) are free to rotate having, in their central hole, longitudinal seats (26 - 99) with inclined sides for the coupling; in one (27 - 71) of said shafts, an axial cavity (34 - 72) and, in correspondence of said gears, radial slide seats (46 - 98) between said cavity and the outside of the shaft; within said radial seats (46 - 98) radially movable pegs (41, 43, 45 - 93, 95, 97) with friction braking means (44 - 94), and with internal end shapings (43A) and external end shapings (43B); within said axial cavity (34 - 72) a pin (35 - 89) with means (47 - 100) for the axial displacement thereof, with axial positioning means (51, 53, 55, 57 - 101, 103) and with shoulder (37 - 91) joined (at 39 - 92) for cooperating with the internal end shapings (43A) of said pegs (41, 43, 45 - 93, 95, 97) and for selectively operating the radial movement of the said pegs in centrifugal direction, in order to selectively engage one of said gears by the engagement of the external end shaping (43B) with the respective longitudinal seats (26 - 99); as well as means (9, 7 - 69, 67) for actuating the driving shaft and drive means (27A - 79A) downstream of the group for the variation of the gear ratio (gear box).

2. Drive according to claim 1, characterized in that for the axial manoeuvering of said pin (35 - 89) a knob (47 - 100) is provided which may be rotatively disengaged from the pin for safety requirements.

3. Drive according to any of the preceding claims, characterized in that the external ends (43B, etc.) of the pegs have two walls whose inclinations correspond to the inclination of the sides of the longitudinal seats (26 - 99) within the holes of the gears, while the internal ends (43A, etc.) may be frusto-conical or, anyway, may have the shape of a surface of revolution.

4. Drive according to any of the preceding claims, comprising a pair of bevel gears (75, 77) inside said box, characterized in that said box (61) is made up of two bodies (61A, 61B) one of which (61A) houses said pair of bevel gears (75, 77) and can be applied to the other (61B) so as to be oriented about one (71) of the shafts of the group for the variation of the gear ratio, thereby allowing the orientation of the input - or output - shaft (63).

5. Drive according to any of the preceding claims, characterized in that the shaft for the manoeuvring pin intended for the selective engagement of one of the gears fitted thereon is the driven shaft (27, 27A).

6. Drive according to any of claims 1 to 4, characterized in that the shaft with cavity for the pin intended for the selective engagement of one of the gears fitted thereon is the secondary shaft (71).

7. Drive according to any of the preceding claims, characterized in that, outside of the box, the input shaft (3 - 63) is provided with a torque-limiter joint (7 - 67).

8. Drive according to any of the preceding claims, characterized in that one of the shafts, especially the output shaft (79), is hollow and splined to receive a motion drawing shaft.

9. A drive comprising: a couple of bevel gears (31, 33; 75, 77) housed in a housing or box (1; 61A); a shaft (3; 63) passing through said box (1; 61A) to form two opposite outputs, and supporting one of said bevel gears; and outside of said box, on said shaft (3; 63) a torque-limiter joint (7, 67) having clutch disks and spring means.

Fig.1

# Fig.2

EP 0 333 668 A2

# Fig. 4

# Fig. 3

# Fig. 5    Fig. 6

EP 0 333 668 A2

Fig. 7

EP 0 333 668 A2